# FASCICULE DE BREVET EUROPEEN

(11) **EP 0 606 809 B1**
(45) Date de publication et mention de la délivrance du brevet: **22.10.1997**
(21) Numéro de dépôt: 93420512.1
(22) Date de dépôt: 29.12.1993
(51) Int. Cl.: G06F 11/20, G05B 9/03

(54) **Système de contrôle-commande de sécurité**
Sicherheitssteuerungssystem
Safety control system

(30) Priorité: 08.01.1993 FR 9300194
(43) Date de publication de la demande: 20.07.1994
(73) Titulaire: SCHNEIDER ELECTRIC SA, 92100 Boulogne Billancourt (FR)
(72) Inventeur: Fretti, Jean-Paul, F-38050 Grenoble Cedex 09 (FR); Yepez, José, F-38050 Grenoble Cedex 09 (FR); Perez, Daniel, F-38050 Grenoble Cedex 09 (FR); Prunier, Michel, F-38050 Grenoble Cedex 09 (FR); Duhaut, Christian, F-38050 Grenoble Cedex 09 (FR)
(74) Mandataire: Jouvray, Marie-Andrée

(56) Documents cités:
- WO-A-89/02124
- DE-A- 2 162 120
- IEEE TRANSACTIONS ON INDUSTRY APPLICATIONS vol. 25, no. 3 , May 1989 , NEW YORK, USA pages 514 - 522 XP000039080 V.J. MAGGIOLI 'The Safety Matrix-A Method for Guidelining Industrial Microcomputers'

## Description

L'invention concerne un système de contrôle-commande de sécurité comportant deux entrées connectées aux sorties d'une voie normale et d'une voie secours, les signaux fournis par les voies normale et secours étant identiques en fonctionnement normal, des moyens de commutation principaux destinés à connecter sélectivement l'une des entrées à une sortie du système, et des moyens de contrôle desdits moyens de commutation.

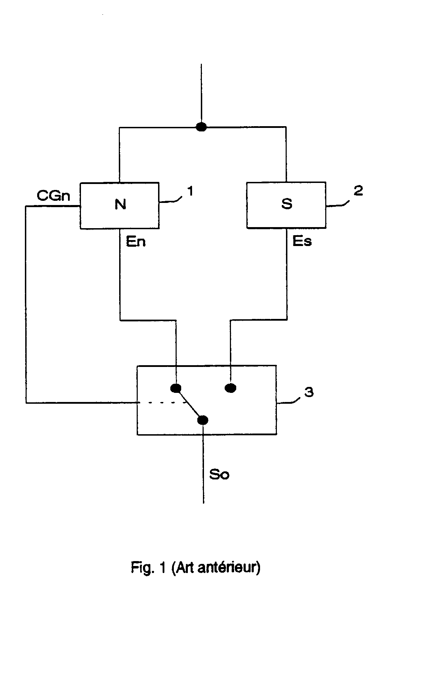

Les systèmes de contrôle-commande utilisés pour le contrôle de processus, notamment pour le contrôle de centrales électriques, doivent contrôler des actionneurs de façon sûre. Classiquement, ceci est réalisé au moyen d'un système du type représenté schématiquement à la figure 1. Deux automates 1 et 2, constituant respectivement une voie normale (N) et une voie secours (S), sont utilisés de manière redondante. Les entrées des deux automates sont connectées à un même dispositif de surveillance, non représenté, de manière à fournir en sortie des signaux redondants, identiques, appliqués à deux entrées En et Es du système de contrôle-commande. Celui-ci comporte une seule sortie So connectée à un ou plusieurs actionneurs (non représentés) à commander. Un organe principal de commutation 3 permet de connecter sélectivement l'une des entrées En et Es à la sortie So. En fonctionnement normal, le signal appliqué sur l'entrée En par la voie normale est transmis à la sortie So. Une défaillance de la voie normale N détectée par celle-ci conduit à l'émission sur une sortie de chien de garde, d'un signal CGn qui commande le basculement de l'organe de commutation 3 de manière à transmettre à la sortie So les informations fournies par la voie secours S.

Dans un tel système, ni les défaillances du chien de garde de la voie normale, ni les défaillances de l'organe de commutation ne sont prises en compte.

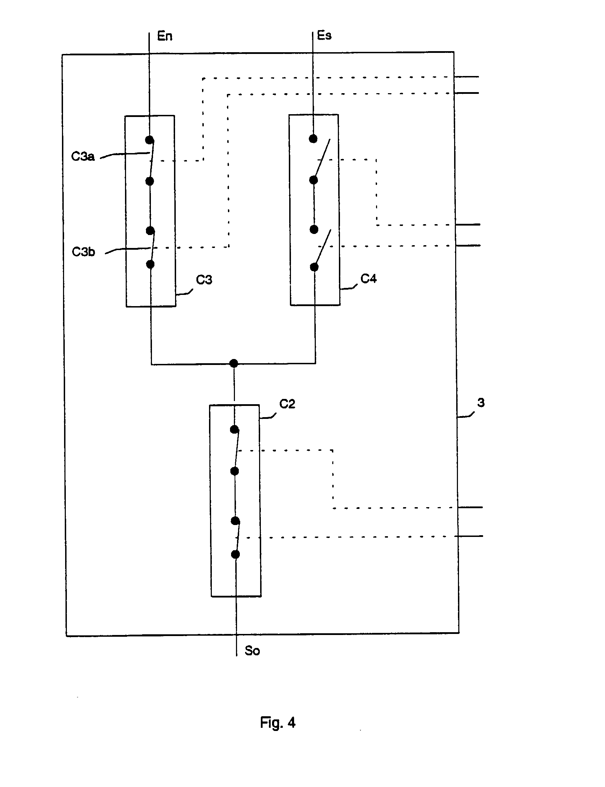

D'autres systèmes de contrôle-commande connus utilisent un voteur dont les entrées sont connectées à au moins trois voies redondantes. Un voteur 2/3 par exemple compare les signaux appliqués sur ses trois entrées et ne transmet en sortie que des signaux correspondants aux signaux appliqués sur au moins deux de ses entrées. Pour pallier à une défaillance de voteur, il est possible d'utiliser deux voteurs en redondance. Bien entendu ceci rend le système d'autant plus complexe et coûteux. Un tel système est par exemple décrit à la figure 4 du document IEEE Transactions on Industry Applications Vol. 25, N°3, Mai 1989, New-York, US, pages 514-522, V.J. Maggioli.

L'invention telle que revendiquée dans la revendication 1 a pour but d'améliorer la disponibilité des systèmes de contrôle-commande du type décrit à la figure 1, tout en assurant une sûreté de fonctionnement optimum. Le préambule de la revendication 1 est également connu du document DE-A-2 162 120.

Selon l'invention, ce but est atteint par la fait que les moyens de contrôle comportent des première, seconde et troisième entrées, respectivement connectées auxdites deux entrées et à la sortie du système, une sortie de repli connectée à la sortie du système par des moyens de commutation auxiliaire contrôlés par lesdits moyens de contrôle, et des moyens de test des moyens de commutation principaux, connectés aux entrées des moyens de contrôle et provoquant la fermeture des moyens de commutation auxiliaires et l'ouverture des moyens de commutation principaux par les moyens de contrôle en cas de détection d'une défaillance des moyens de commutation principaux.

De préférence, les moyens de contrôle appliquent sur la sortie de repli des signaux représentatifs des signaux appliqués sur sa première entrée en cas de défaillance des moyens de commutation principaux.

Dans un mode de réalisation préférentiel, les moyens de contrôle comportent des moyens de mémorisation de signaux représentatifs d'une position de repli, connectés à la sortie de repli.

Pour augmenter la disponibilité du système, les moyens de contrôle comportent des moyens destinés, en cas de défaillance des voies normale et secours, à provoquer l'application sur la sortie de repli de signaux représentatifs des signaux appliqués aux entrées du système à l'instant précédant la détection d'une défaillance, à provoquer la fermeture des moyens de commutation auxiliaires et l'ouverture des moyens de commutation principaux.

Pour réduire les à-coups également lors du passage d'une position de repli à une position normale de commutation, les moyens de contrôle comportent des moyens permettant une modification progressive des signaux représentatifs de la position de repli avant une ouverture des moyens de commutation auxiliaires et une fermeture des moyens de commutation principaux, pour amener progressivement les signaux représentatifs de la position de repli à des valeurs sensiblement identiques aux valeurs des signaux d'entrée appliquées au système.

Selon un mode de réalisation préférentiel, les moyens de contrôle comportent des moyens d'autotest et des moyens automatiques de contrôle commandant automatiquement la commutation des moyens de commutation principaux sur la sortie de la voie normale en cas de détection d'une défaillance des moyens de contrôle.

D'autres avantages et caractéristiques ressortiront plus clairement de l'exposé qui va suivre, de modes de réalisation particuliers de l'invention, donnés à titre d'exemples non limitatifs et représentés aux dessins annexés sur lesquels:

La figure 1 illustre l'art antérieur déjà mentionné ci-dessus.

La figure 2 illustre sous forme de schéma-bloc, un système de contrôle-commande selon l'invention.

La figure 3 représente un mode particulier de réalisation du circuit de contrôle du système selon la figure 2.

La figure 4 représente un mode particulier de réalisation de l'organe principal de commutation du système selon la figure 2.

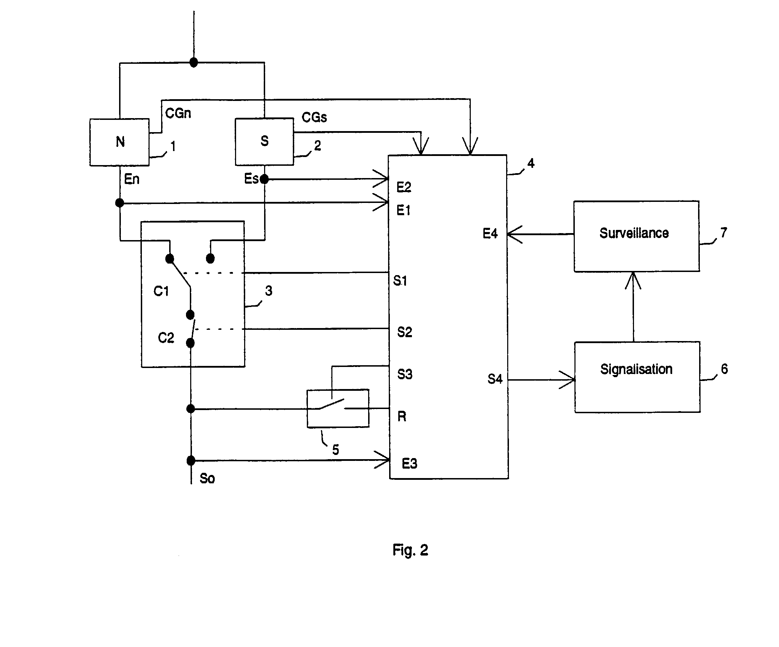

Le système représenté à la figure 2 comporte, comme le système de la figure 1, un organe principal de commutation 3 permettant de connecter sélectivement des entrées En et Es à une sortie So. Le contrôle de l'organe 3 est réalisé par un circuit de contrôle 4, à microprocesseur. Le circuit de contrôle reçoit en entrée (E1, E2, E3) les signaux présents sur les entrées En et Es et sur la sortie So du système. Il comporte une sortie de repli R et des sorties (S1, S2, S3) de contrôle destinées en contrôle de l'organe principal de commutation 3 ainsi que d'un organe auxiliaire de commutation 5 connecté entre la sortie du repli R et la sortie So du système. Une sortie S4 du circuit de contrôle 4 est connectée à un dispositif de signalisation 6, tandis qu'une entrée E4 est connectée à un organe de surveillance 7. Le dispositif 6 et l'organe 7 peuvent communiquer l'un avec l'autre, être intégrés dans le circuit de contrôle 4 et/ou être localisés à distance, éventuellement dans un seul dispositif.

Chacun des automates 1 et 2 fournit au circuit de contrôle 4 un signal de chien de garde, CGn ou CGs, représentatif de son fonctionnement. Classiquement, un tel signal passe à O en cas de défaillance de l'automate correspondant.

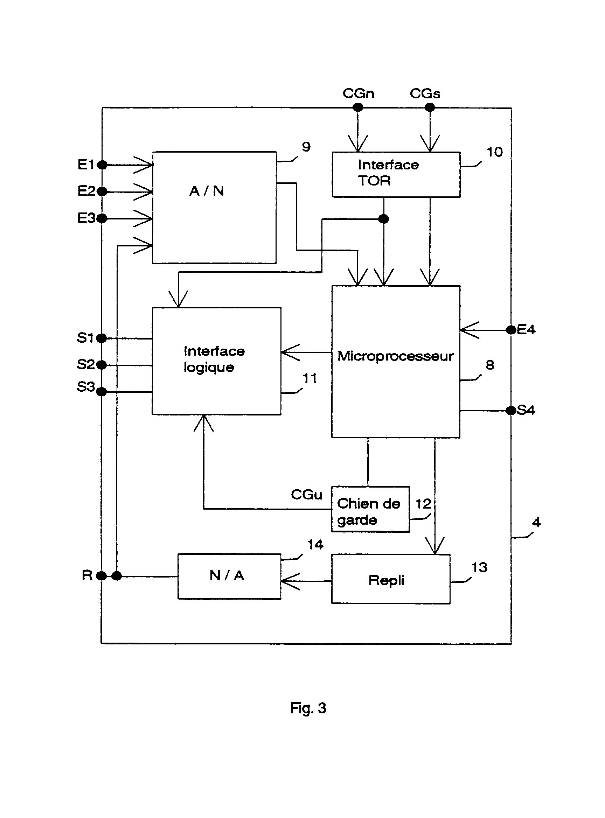

Un mode de réalisation particulier du circuit de contrôle 4, plus particulièrement adapté au cas où les signaux d'entrée et de sortie du système sont des signaux analogiques, est représenté à la figure 3.

Sur cette figure, le circuit de contrôle comporte une unité centrale représentée sous la forme d'un microprocesseur 8. Le microprocesseur 8 reçoit les signaux appliqués sur les entrées E1, E2 et E3 du circuit de contrôle par l'intermédiaire d'un convertisseur analogique/numérique 9. Il reçoit également les signaux de chien de garde CGn et CGs, éventuellement par l'intermédiaire d'une interface tout ou rien (TOR) 10, ainsi que les signaux appliqués sur l'entrée E4 du système. Il fournit des signaux de contrôle à une interface logique 11, des signaux de signalisation à la sortie S4 et des signaux à un circuit de chien de garde 12, de type classique, qui produit un signal de chien de garde CGu représentatif du fonctionnement du microprocesseur. Il fournit également des signaux à un circuit 13 de mémorisation d'une position de repli, lui-même connecté à la sortie de repli R par l'intermédiaire d'un convertisseur numérique-analogique 14. L'interface logique 11 reçoit également les signaux de chien garde CGn et CGu, et est connecté aux sorties de contrôle S1 à S3 du système.

A chaque instant le circuit de contrôle 4 teste l'état du système et le bon fonctionnement des voies normale et secours en amont. En particulier, il vérifie l'état des différents chiens de garde (CGn, CGs, CGu), la cohérence des signaux d'entrée En et Es et leur cohérence avec les signaux de sortie So.

En l'absence de défaut à la fois dans le système lui-même et en amont de celui-ci (CGn = CGs = CGu = 1, En = Es = So), le circuit de contrôle 4 fournit, sur ses sorties de contrôle S1 à S3, des signaux tels que la sortie So du système soit connectée à l'entrée En par l'organe principal de commutation 3, et que l'organe auxiliaire de commutation 5 soit ouvert. Cette position normale des commutateurs correspond à la position illustrée sur la figure 2.

Si le circuit de contrôle 4 détecte une défaillance dans l'organe principal de commutation 3, il fournit, sur ses sorties de contrôle S1 à S3, des signaux tels que la connexion entre les entrées En et Es et la sortie So soit interrompue et que la sortie So soit connectée à la sortie de repli R. Le circuit de contrôle 4 prend alors le relais de l'organe principal de commutation 3 et applique sur la sortie de repli R des signaux représentatifs des signaux présents sur les entrées En et Es et respectivement appliqués sur les entrées E1 et E2 du circuit de contrôle 4. Dans le mode de réalisation représenté à la figure 3, ces signaux sont convertis en numérique par le convertisseur 9 et lus par le microprocesseur 8. En cas de défaillance de l'organe principal de commutation détecté par le circuit de contrôle 4, la voie normale fonctionnant correctement (CGn = 1), le microprocesseur fournit au circuit de mémorisation 13 les valeurs d'entrée En. Ces valeurs sont converties en analogique par le convertisseur 14 avant d'être appliqués sur la sortie de repli R. Le circuit de contrôle 4 prend ainsi, sans à-coups, le relais de l'organe principal de commutation 3 en cas de défaillance de celui-ci. Il constitue ainsi une voie redondante susceptible de remplacer l'organe principal de commutation.

Si le circuit de contrôle détecte simultanément un mauvais fonctionnement de la voie normale en amont du système (CGn = 0), la voie de secours fonctionnant correctement (CGs = 1), il applique alors sur la sortie de repli R des signaux représentatifs de l'entrée Es.

Dans le mode de réalisation préférentiel représenté à la figure 2, l'organe principal de commutation 3 est constitué par la connexion en série de deux éléments de commutation. Un commutateur C1 est connecté en série avec un interrupteur C2. La sortie du commutateur C1 peut, sous le contrôle des signaux appliqués sur une sortie de contrôle S1 du circuit 4, être connectée sélectivement aux entrée En et Es. L'interrupteur C2, interposé entre la sortie du commutateur C1 et la sortie So, est contrôlé par les signaux appliqués sur une sortie de contrôle S2 du circuit 4. Dans ce cas, le collage en position ouverte de l'interrupteur C2 peut être détecté par le circuit de contrôle 4 par simple comparaison des signaux présents sur l'entrée En et sur la sortie So. En effet, alors que CGn = CGu = 1, les signaux En et So ne sont pas identiques (En ≠ So) si l'interrupteur C2 est ouvert.

Par contre, un simple test de cohérence entre En et So et entre Es et So n'est pas suffisant pour détecter le collage en position fermée de C2, ni le collage dans l'une de ses positions de commutation du commutateur C1.

Dans le mode de réalisation particulier de l'organe principal de commutation représenté à la figure 4, le commutateur C1 est réalisé au moyen d'interrupteurs indépendants C3 et C4 disposés respectivement entre les entrées En et Es et l'entrée de l'interrupteur C2. Dans ce cas, la non-cohérence entre les sorties En et So peut être représentative du collage en position ouverte soit de C2, soit de C3. De même, la non-cohérence entre les sorties Es et So, si le commutateur C1 est basculé en position de secours, peut être représentative du collage en position ouverte soit de C2, soit de C4.

Le collage en position fermée de l'un des éléments C2, C3, C4 de l'organe 3 n'est pas détecté par le test de cohérence entre les entrées En et Es et la sortie So.

Pour améliorer le test de la défaillance de l'organe principal de commutation 3, le circuit de contrôle 4 peut réaliser également des tests dynamiques en ligne, par impulsions fines. Le test impulsions fines consiste à faire commuter pendant un temps très court, quelques millisecondes par exemple, un des éléments de l'organe 3 et à vérifier l'influence de cette commutation sur les signaux de sortie So. Ainsi, l'ouverture pendant une période de test très courte de l'interrupteur C2 ou de l'interrupteur C3, alors que le système est dans sa position normale de fonctionnement, doit conduire à l'interruption des signaux appliqués sur So si l'interrupteur concerné n'est pas collé en position fermée. Par contre, le collage en position fermée est immédiatement détecté, le signal présente en So restant identique au signal d'entrée En, pendant le test. La durée des impulsions de test est telle que les modifications des signaux de sortie pendant le test sont ignorées par les actionneurs situés en aval.

La détection de collage en position fermée de l'un des interrupteurs C2, C3 ou C4 conduit, comme leur collage en position ouverte, le circuit de contrôle à ouvrir l'organe principal de commutation 3 et à prendre le relais de l'organe principal de commutation défaillant en appliquant sur la sortie de repli des signaux représentatifs des signaux d'entrée du système, tout en fermant l'organe auxiliaire de commutation 5.

Afin de permettre une identification plus précise des défauts affectant l'organe de commutation 3, le test peut être morcelé par sous-fonctions. Ainsi, le circuit de contrôle peut, par exemple, recevoir non seulement les signaux En, Es et So, mais comporter également une entrée connectée à la sortie du commutateur C1. Il est ainsi possible de localiser plus précisément une éventuelle défaillance et, en effectuant un contrôle de la cohérence entre les tests morcelés et les tests globaux d'améliorer la fiabilité de ces tests.

Comme représenté à la figure 4, chacun des interrupteurs peut être constitué par la connexion en série de deux interrupteurs élémentaires (C3a et C3b pour C3). Les deux interrupteurs élémentaires sont commandés par des signaux identiques, mais de préférence à partir de sorties distinctes du circuit de contrôle. En cas de collage en position fermée de l'un des interrupteurs élémentaires, il est toujours possible d'ouvrir l'interrupteur correspondant, et, en conséquence, d'ouvrir l'organe de commutation principal.

Le circuit de contrôle réagit non seulement en cas de défaillance de l'organe principal de commutation 3, mais également en cas de défaillance des voies normale ou secours en amont du système, en cas de défaillance du circuit de contrôle lui-même et en cas de défaillance de l'organe auxiliaire de commutation, de manière à optimiser la fiabilité et la disponibilité du système. Toute défaillance détectée par le circuit de contrôle est signalée au dispositif de signalisation 6.

Le circuit de contrôle détecte une défaillance en amont en analysant les signaux de chien de garde CGn et CGs des automates 1 et 2 et en effectuant une analyse de cohérence des signaux appliqués aux entrées En et Es.

Lorsque le chien de garde de l'automate 1 de voie normale signale une défaillance de celui-ci (CGn = 0), cette défaillance est détectée par le circuit de contrôle 4. En l'absence de défaillance de la voie de secours (CGs = 1), de l'organe principal de commutation 3 et du circuit de contrôle lui-même (CGu = 1), l'organe de contrôle 4 fournit sur ses sorties de contrôle (S1 - S3) des signaux de contrôle destinés à faire passer l'organe principal de commutation 3 en position de secours. Dans cette position, l'organe 3 connecte l'entrée Es à la sortie So, le commutateur C1 basculant par rapport à la position représentée à la figure 2, tandis que l'interrupteur C2 reste fermé et que l'organe auxiliaire de commutation 5 reste en position d'ouverture. Dans le mode de réalisation représenté à la figure 4, l'interrupteur C3 s'ouvre tandis que l'interrupteur C4 est fermé.

Lorsque le chien de garde de l'automate 2 de secours signale une défaillance de celui-ci (CGs = 0), en l'absence de défaillance de la voie normale (CGn = 1), de l'organe principal de commutation (En = So) et du circuit de contrôle (CGu = 1), le circuit de contrôle ne modifie pas le fonctionnement du système qui reste dans la position illustrée à la figure 2, mais signale cette défaillance au dispositif de signalisation 6.

Lorsque le circuit de contrôle 4, fonctionnant correctement (CGu = 1), détecte une défaillance simultanée des automates 1 et 2, c'est à dire soit lorsque CGn = CGs = 0, soit lorsque, bien que CGn = CGs = 1, il y a incohérence entre les signaux d'entrée du système (En ≠ Es), il commande le passage du système en position de repli. Dans cette position, l'organe principal de commutation 3 est ouvert et l'organe de commutation auxiliaire 5 est fermé, connectant la sortie So à la sortie de repli R.

Les signaux appliqués alors sur la sortie de repli sont des valeurs mises en mémoire dans le circuit de mémorisation 13. Ces signaux pourraient correspondre à une valeur fixe, prédéterminée, mettant les actionneurs contrôlés par le système dans une position prédéterminée sûre. Une telle valeur fixe pourrait éventuellement être réalisée sous forme câblée. L'utilisation d'une valeur fixe présente l'inconvénient de provoquer des à-coups lors du passage à la position de repli. Pour écarter cet inconvénient, les valeurs mises en mémoire correspondent, de préférence, aux signaux réels d'entrée du système à l'instant précédant la défaillance. Les signaux d'entrée étant appliqués en permanence à l'entrée du circuit de contrôle pour réaliser les tests de cohérence, le microprocesseur 8 peut systématiquement mettre en mémoire dans le circuit 13 la valeur des derniers signaux valides, ces signaux étant ensuite utilisés comme position de repli lors de la détection d'une défaillance simultanée des deux automates. Après passage à la position de repli, le circuit de contrôle peut maintenir constante la valeur appliquée à la sortie de repli ou comporter des moyens, par exemple sous la forme d'un sous-programme du microprocesseur 8, pour passer progressivement à une valeur correspondant à une position prédéterminée considérée comme sûre. De manière analogue, le passage de la position de repli à la position normale peut s'effectuer de façon progressive pour éliminer les à-coups, par exemple à partir d'un coefficient angulaire de modification préalablement mis en mémoire dans le circuit de contrôle.

Le passage en position de repli s'effectue automatiquement et est signalé au dispositif de signalisation 6. Un opérateur peut alors éventuellement commander manuellement les actionneurs situés en aval du système. Cette commande manuelle peut être effectuée à partir de l'organe de surveillance 7, situé localement ou à distance. Les organes de commande manuelle contrôlent alors la position des actionneurs par l'intermédiaire du circuit de contrôle 4, plus particulièrement par l'intermédiaire du microprocesseur et du circuit de mémorisation 13.

Un programme automatique de contrôle peut également être introduit dans l'organe de surveillance 7 de manière à prendre automatiquement le relais de la position de repli lorsque le passage à la position de repli est signalé par le dispositif de signalisation 6.

Le remplacement de l'organe principal de commutation 3 défaillant par le circuit de contrôle ainsi que le passage en position de repli en cas de défaillance des automates en amont du système permettent d'améliorer de façon notable la disponibilité du système. Le morcellement des tests ainsi que l'utilisation de tests dynamiques en ligne permettent d'améliorer la fiabilité. Celle-ci peut être encore améliorée par l'autotest du circuit de contrôle 4.

L'autotest du circuit de contrôle s'effectue essentiellement à partir de son propre signal de chien de garde CGu. Dès que celui-ci signale une défaillance (CGu = 0), le circuit de contrôle s'efface, laissant le système fonctionner en simple commutateur. Dans le mode de réalisation préférentiel représenté à la figure 3, l'interface logique 11 permet de prendre en compte ce type de défaillance et de contrôler les organes de commutation 3 et 5. L'interface logique est conçue de manière à fournir aux sorties de contrôle S1 - S3 les signaux de contrôle qui lui sont appliqués par le microprocesseur 8 lorsque CGu = 1. Par contre, si CGu = 0, alors les signaux de sortie du microprocesseur sont inhibés et si le signal de chien de garde CGn de la voie normale est égal à 1, les signaux de sortie S1-S3 sont tels que les commutateurs soient dans la position normale représentée à la figure 2. Le passage à 0 de CGn commande automatiquement, la modification des signaux de sortie de l'interface pour faire basculer l'organe principal de commutation en position de secours.

Ainsi, en cas de défaillance du circuit de contrôle, la position normale de commutation est automatiquement utilisée, avec passage automatique à la position de secours, contrôlé par le chien de garde CGn de la voie normale, en cas de défaillance de la voie normale. En cas de défaillance du circuit de contrôle, les fonctions de repli et de redondance par l'intermédiaire du circuit de contrôle ne sont plus assurées et une telle défaillance est considérée comme une défaillance à remédier de façon urgente et signalé comme telle au dispositif de signalisation 6.

Selon une variante non représentée, au lieu de passer en position normale en cas de défaillance du microprocesseur, le système peut passer dans une position de repli câblé, connectant par l'intermédiaire d'une interface logique la sortie So à des valeurs précâblées tout en contrôlant l'ouverture de l'organe principal de commutation 3. Une telle solution est moins satisfaisante car elle provoque des à-coups et garantit moins longtemps un fonctionnement normal. La solution précédente présente l'inconvénient de laisser le système à la merci d'une défaillance de l'organe principal de commutation, mais la probabilité pour que les deux défaillances soient simultanées est très faible et il est généralement préférable de privilégier la disponibilité des valeurs normales en sortie.

Le circuit de contrôle teste non seulement le bon fonctionnement du microprocesseur 8, mais des autres éléments qui le composent, par exemple de l'interface TOR 10 et des convertisseurs 9 et 14. Le test de l'interface TOR peut par exemple être du type test par impulsions fines, les entrées TOR étant forcées momentanément à une valeur prédéterminée. En ce qui concerne les convertisseurs, le test peut être réalisé par relecture des valeurs analogiques présentes sur la sortie de repli R. Les signaux de sortie du convertisseur 14 sont appliqués à l'entrée du convertisseur 9 et le microprocesseur vérifie la cohérence entre les signaux reconvertis en numérique par le convertisseur 9 et les signaux appliqués par le circuit de mémorisation 13 au convertisseur 14. Si le circuit de contrôle détecte une défaillance de l'un des éléments précités, le microprocesseur signale la défaillance et fournit aux sorties de contrôle S1 - S3 des signaux tels que les commutateurs soient dans la position normale représentée à la figure 2. Le passage dans la position de secours peut également être réalisé en cas de défaillance ultérieure de l'automate normal dans le cas où la défaillance initiale concerne les convertisseurs.

Le test du système est, de préférence, complété par un test en ligne, par impulsions fines de l'organe auxiliaire de commutation 5. Pendant la période de test, très courte pour ne pas intervenir dans le fonctionnement des actionneurs disposés en aval du système, l'organe 5 est fermé, un signal prédéterminé étant simultanément appliqué sur la sortie de repli. Si l'organe est collé ouvert, le circuit de contrôle signale le défaut et maintient le fonctionnement du système en position normale ou, le cas échéant, en position de secours.

Le circuit de contrôle 4 possède de préférence un circuit d'alimentation, non représenté, comportant deux circuits élémentaires en redondance. Ce circuit d'alimentation est également testé. Pour cela les signaux de sortie de chacun des circuits d'alimentation élémentaires sont appliqués à l'entrée du convertisseur analogique-numérique 9 et comparés par le microprocesseur à une fourchette de valeurs prédéterminées. La défaillance de l'un des circuits élémentaires est, bien entendu, signalé au dispositif de signalisation 6.

Ainsi, le circuit de contrôle teste, en temps réel, les diverses fonctions du système et gère en conséquence les commutations des organes de commutation. Il fait notamment passer le système en position de secours en cas de défaillance de la voie normale, en position de repli en cas de défaillance des automates en amont du système, le circuit de contrôle réalisant une fonction de redondance en cas de défaillance de l'organe principal de commutation. En cas de défaillance grave du circuit de contrôle lui-même, le chien de garde de la voie normale contrôle, par l'intermédiaire de l'interface logique, le maintien du système en position normale et son passage éventuel en position de secours.

Le système décrit ci-dessus, tolérant à la première faute, présente un taux d'indisponibilité de l'ordre de 10^{-7.}

Dans la description ci-dessus, les signaux appliqués à l'entrée du système sont analogiques. La même technique peut être utilisée avec des signaux d'entrée de type tout ou rien (TOR). Dans ce cas, le circuit de contrôle ne comporte pas de convertisseurs, mais, si nécessaire, un circuit adaptateur disposé à l'entrée du système et destiné notamment à assurer un isolement galvanique entre les automates et le système. Une interface de puissance est, de plus, interposée entre la sortie So et les actionneurs à commander.

Les organes de commutation sont constitués par des commutateurs et/ou des interrupteurs électromécaniques ou électroniques.

Les signaux CGn et CGs peuvent éventuellement, après multiplexage, être appliqués sur une même entrée du circuit de contrôle.

## Revendications

1. Système de contrôle-commande de sécurité comportant deux entrées (En, Es) connectées aux sorties d'une voie normale (1) et d'une voie secours (2), les signaux fournis par les voies normale et secours étant identiques en fonctionnement normal, des moyens de commutation principaux (3) destinés à connecter sélectivement l'une des entrées (En, Es) à une sortie (So) du système, et des moyens (4) de contrôle desdits moyens de commutation, système caractérisé en ce que les moyens de contrôle (4) comportent des première (El), seconde (E2) et troisième (E3) entrées, respectivement connectées auxdites deux entrées (En, Es) et à la sortie (So) du système, une sortie de repli (R) connectée à la sortie (So) du système par des moyens de commutation auxiliaire (5) contrôlés par lesdits moyens de contrôle (4), et des moyens (8) de test des moyens de commutation principaux, connectés aux entrées (El, E2, E3) des moyens de contrôle et provoquant la fermeture des moyens de commutation auxiliaires (5) et l'ouverture des moyens de commutation principaux (3) par les moyens de contrôle (4) en cas de détection d'une défaillance des moyens de commutation principaux (3).

2. Système selon la revendication 1, caractérisé en ce que les moyens de contrôle (4) appliquent sur la sortie de repli (R) des signaux représentatifs des signaux appliqués sur sa première entrée (En) en cas de défaillance des moyens de commutation principaux (3).

3. Système selon l'une des revendications 1 et 2, caractérisé en ce que les moyens de contrôle (4) comportent des moyens (13) de mémorisation de signaux représentatifs d'une position de repli, connectés à la sortie de repli (R).

4. Système selon l'une quelconque des revendications 1 à 3, caractérisé en ce que les moyens de contrôle (4) comportent des moyens (8, 13, 11) destinés, en cas de défaillance des voies normale et secours (1, 2), à provoquer l'application sur la sortie de repli (R) de signaux représentatifs des signaux appliqués aux entrées (En, Es) du système à l'instant précédant la détection d'une défaillance, et à provoquer la fermeture des moyens de commutation auxiliaires (5) et l'ouverture des moyens de commutation principaux (3).

5. Système selon l'une des revendications 1 à 3, caractérisé en ce que les moyens de contrôle (4) comportent des moyens (8, E4, 13, 11) destinés, en cas de défaillance des voies normale et secours (1, 2), à provoquer l'application sur la sortie de repli (R) de signaux appliqués sur une entrée (E4) de commande par des moyens de commande manuelle et/ou à distance, à provoquer la fermeture des moyens de commutation auxiliaire (5) et l'ouverture des moyens de commutation principaux (3).

6. Système selon l'une des revendications 4 et 5, caractérisé en ce que les moyens de contrôle (4) comportent des moyens de détection d'une incohérence entre les signaux appliqués sur les première et seconde entrées (En, Es) du système.

7. Système selon l'une quelconque des revendications 4 à 6, caractérisé en ce que les moyens de contrôle (4) comportent au moins une quatrième entrée (CGn, CGs) sur laquelle sont appliqués les signaux respectivement représentatifs du bon fonctionnement des voies normale et secours (1, 2) et des moyens (8) d'analyse desdits signaux (CGn, CGs).

8. Système selon la revendication 3, caractérisé en ce que les moyens de contrôle (4) comportent des moyens permettant une modification progressive des signaux représentatifs de la position de repli avant une ouverture des moyens (5) de commutation auxiliaires et une fermeture des moyens (3) de commutation principaux, pour amener progressivement les signaux représentatifs de la position de repli à des valeurs sensiblement identiques aux valeurs des signaux d'entrée (En, Es) appliquées au système.

9. Système selon l'une quelconque des revendications 1 à 8, caractérisé en ce que les moyens de contrôle (4) comportent des moyens (12) d'autotest et des moyens automatiques de contrôle (11) commandant automatiquement la commutation des moyens de commutation principaux sur la sortie de la voie normale en cas de détection d'une défaillance des moyens de contrôle.

10. Système selon la revendication 9, caractérisé en ce que les moyens de contrôle (4) comportant un microprocesseur (8), les moyens automatiques de contrôle (11) comportent des circuits logiques comportant des entrées recevant des signaux de contrôle fournis par le microprocesseur (8) et des signaux (CGn, CGu) représentatifs respectivement du bon fonctionnement de la voie normale (1) et du microprocesseur (8), lesdits circuits logiques fournissant les signaux de contrôle (S1, S2, S3) des moyens de commutation (3, 5).

## Patentansprüche

1. Sicherheits-Steuerungssystem mit zwei, an die Ausgänge eines Normalpfads (1) bzw. eines Hilfspfads (2) angeschlossenen Eingängen (En, Es), wobei die vom Normalpfad und vom Hilfspfad im Normalbetrieb gelieferten Signale identisch sind, mit Haupt-Umschaltmitteln (3) zur selektiven Verbindung eines der Eingänge (En, Es) mit einem Ausgang (So) des Systems sowie mit, die genannten Umschaltmittel beaufschlagenden Steuermitteln (4), dadurch gekennzeichnet, daß die Steuermittel (4) einen ersten (E1), zweiten (E2) und dritten Eingang (E3), die jeweils mit den genannten beiden Eingängen (En, Es) bzw. mit dem Ausgang (So) des Systems verbunden sind, einen Ersatzausgang (R), der über, durch die genannten Steuermittel (4) angesteuerte Hilfs-Umschaltmittel (5) mit dem Ausgang (So) des Systems verbunden ist, sowie zur Überprüfung der Haupt-Umschaltmittel dienende Testmittel (8) umfassen, die an die Eingänge (E1, E2, E3) der Steuermittel angeschlossen sind und bei Erfassung einer Störung der Haupt-Umschaltmittel (3) das Einschalten der Hilfs-Umschaltmittel (5) sowie das Ausschalten der Haupt-Umschaltmittel (3) bewirken.

2. System nach Anspruch 1, dadurch gekennzeichnet, daß die Steuermittel (4) den Ersatzausgang (R) mit Signalen beaufschlagen, die, ihren ersten Eingang (En) bei Störung der Haupt-Umschaltmittel (3) beaufschlagende Signale abbilden.

3. System nach einem der Ansprüche 1 und 2, dadurch gekennzeichnet, daß die Steuermittel (4) mit dem Ersatzausgang (R) verbundene Mittel (13) zur Speicherung von, eine Ersatzstellung abbildenden Signalen umfassen.

4. System nach irgendeinem der Ansprüche 1 bis 3, dadurch gekennzeichnet, daß die Steuermittel (4) Mittel (8, 13, 11) umfassen, die dazu dienen, bei Störung des Haupt- und des Hilfspfads (1, 2) die Beaufschlagung des Ersatzausgangs (R) mit Signalen zu bewirken, die, die Eingänge (En, Es) des Systems unmittelbar vor der Erfassung einer Störung beaufschlagende Signale abbilden, sowie das Einschalten der Hilfs-Umschaltmittel (5) und das Ausschalten der Haupt-Umschaltmittel (3) zu bewirken.

5. System nach einem der Ansprüche 1 bis 3, dadurch gekennzeichnet, daß die Steuermittel (4) Mittel (8, E4, 13, 11) umfassen, die dazu dienen, bei Störung des Haupt- und des Hilfspfads (1, 2) die Beaufschlagung des Ersatzausgangs (R) mit, über Hand- und/oder Femsteuermittel einem Steuereingang (E4) zugeführten Signalen sowie das Einschalten der Hilfs-Umschaltmittel (5) und das Ausschalten der Haupt-Umschaltmittel (3) zu bewirken.

6. System nach einem der Ansprüche 4 und 5, dadurch gekennzeichnet, daß die Steuermittel (4) Mittel zur Erfassung einer Abweichung zwischen den, den ersten und den zweiten Eingang (En, Es) des Systems beaufschlagenden Signalen umfassen.

7. System nach irgendeinem der Ansprüche 4 bis 6, dadurch gekennzeichnet, daß die Steuermittel (4) mindestens einen vierten Eingang (CGn, CGs), der mit den, einen einwandfreien Betrieb des Normalpfads bzw. des Hilfspfads (1, 2) abbildenden Signalen beaufschlagt wird, sowie Mittel (8) zur Analyse der genannten Signale (CGn, (CGs) umfassen.

8. System nach Anspruch 3, dadurch gekennzeichnet, daß die Steuermittel (4) Mittel umfassen, die vor einem Ausschalten der Haupt-Umschaltmittel (3) und einem Einschalten der Hilfs-Umschaltmittel (5) eine allmähliche Veränderung der die Ersatzstellung abbildenden Signale ermöglichen, um die, die Ersatzstellung abbildenden Signale allmählich an Werte anzupassen, die den Werten der Eingangssignale (En, Es) annähernd entsprechen, mit denen das System beaufschlagt wird.

9. System nach irgendeinem der Ansprüche 1 bis 8, dadurch gekennzeichnet, daß die Steuermittel (4) Selbsttestmittel (12) sowie automatische Steuermittel (11) umfassen, die bei Erfassung einer Störung der Steuermittel eine automatische Umschaltung der Haupt-Umschaltmittel (3) auf den Ausgang des Normalpfads bewirken.

10. System nach Anspruch 9, dadurch gekennzeichnet, daß die Steuermittel (4) einen Mikroprozessor (8) und die automatischen Steuermittel (11) Logikschaltungen mit Eingängen umfassen, die mit vom Mikroprozessor (8) gelieferten Steuersignalen sowie mit, den einwandfreien Betrieb des Normalpfads (1) bzw. des Mikroprozessors (8) abbildenden Signalen beaufschlagt werden, wobei die genannten Logikschaltungen die Signale (S1, S2, S3) zur Ansteuerung der Umschaltmittel (3, 5) liefern.

## Claims

1. A safety control and monitoring system comprising two inputs (En, Es) connected to the outputs of a normal channel (1) and of a standby channel (2), the signals supplied by the normal and standby channels being identical in normal operation, main switching means (3) designed to selectively connect one of the inputs (En, Es) to an output (So) of the system, and control means (4) for controlling said switching means, a system characterized in that the control means (4) comprise first (El), second (E2) and third (E3) inputs respectively connected to said two inputs (En, Es) and to the output (So) of the system, a fallback output (R) connected to the output (So) of the system by auxiliary switching means (5) controlled by said control means (4), and means (8) for testing the main switching means, connected to the inputs (El, E2, E3) of the control means and causing closing of the auxiliary switching means (5) and opening of the main switching means (3) by the control means (4) in the event of a failure of the main switching means (3) being detected.

2. The system according to claim 1, characterized in that the control means (4) apply to the output of the fallback output (R) signals representative of the signals applied to the first input (En) in the event of a failure of the main switching means (3).

3. The system according to one of the claims 1 and 2, characterized in that the control means (4) comprise means (13) for storing signals representative of a fallback position, connected to the fallback output (R).

4. The system according to any one of the claims 1 to 3, characterized in that the control means (4) comprise means (8, 13, 11) designed, in the event of failure of the normal and standby channels (1, 2), to cause signals representative of the signals applied to the inputs (En, Es) of the system at the moment preceding detection of a failure to be applied to the fallback output (R), and to cause closing of the auxiliary switching means (5) and opening of the main switching means (3).

5. The system according to one of the claims 1 to 3, characterized in that the control means (4) comprise means (8, E4, 13, 11) designed, in the event of failure of the normal and standby channels (1, 2), to cause signals applied to a control input (E4) by manual and/or remote control means to be applied to the fallback output (R), and to cause closing of the auxiliary switching means (5) and opening of the main switching means (3).

6. The system according to one of the claims 4 and 5, characterized in that the control means (4) comprise means for detecting a discrepancy between the signals applied to the first and second inputs (En, Es) of the system.

7. The system according to any one of the claims 4 to 6, characterized in that the control means (4) comprise at least a fourth input (CGn, CGs) to which there are applied the signals respectively representative of correct operation of the normal and standby channels (1, 2) and of the means (8) for analysing said signals (CGn, CGs).

8. The system according to claim 3, characterized in that the control means (4) comprise means enabling a progressive modification of the signals representative of the fallback position before opening of the auxiliary switching means (5) and closing of the main switching means (3), to adjust the signals representative of the fallback position progressively to values appreciably identical to the values of the input signals (En, Es) applied to the system.

9. The system according to any one of the claims 1 to 8, characterized in that the control means (4) comprise self-test means (12) and automatic control means (11) automatically commanding switching of the main switching means to the output of the normal channel in the event of a failure of the control means being detected.

10. The system according to claim 9, characterized in that the control means (4) comprising a microprocessor (8), the automatic control means (11) comprise logic circuits comprising inputs receiving control signals supplied by the microprocessor (8) and signals (CGn, CGu) representative respectively of correct operation of the normal channel (1) and of the microprocessor (8), said logic circuits supplying the control signals (S1, S2, S3) for control of the switching means (3, 5).
